# EUROPEAN PATENT SPECIFICATION

(11) **EP 1 119 149 B1**
(45) Date of publication and mention of the grant of the patent: **24.11.2004**
(21) Application number: 00440015.6
(22) Date of filing: 21.01.2000
(51) Int. Cl.: H04L 29/06

(54) **Telecommunication system and method for transporting and protecting information**
Telekommunikationssystem, und Verfahren zum Transportieren und Schützen von Informationen
Système de communication, et procédé pour la protection et le transport d'information

(43) Date of publication of application: 25.07.2001
(73) Proprietor: ALCATEL, 75008 Paris (FR)
(72) Inventor: Hofkens, Jürgen, 2100 Deurne (BE)
(74) Representative: Rausch, Gabriele, Dr.

(56) References cited:
- EP-A- 0 715 243
- US-A- 5 602 916
- US-A- 5 638 448
- US-A- 5 802 178
- US-A- 5 935 248

## Description

The invention relates to a telecommunication system for transporting information from a sender using a sending terminal to a receiver using a receiving terminal and comprising a protection mechanism for protecting said information against becoming available to at least one third party.

Such a telecommunication system is of common general knowledge and comprises for example said sending terminal in the form of a first pc comprising a modem coupled to a telecommunication network and said receiving terminal in the form of a second pc comprising a modem coupled to said telecommunication network. Said information is for example an email message, or a text document, or a fax, or at least one data packet, or at least one Voice-Over-IP packet etc. Said protection mechanism is for example the known DES algorithm or the known 3DES (TRIPLE DES) algorithm, and is realized entirely by software, entirely by hardware, or by a combination of both.

In this context the US Patent Publication 5,935,248, of August 10, 1999, describes a security level control apparatus for controlling security levels of a communication. The European Patent Application Publication 0 715 243, published on 1996-06-05, teaches a system for controlling the distribution and use of digital works having a fee reporting mechanism.

Such separate known telecommunication systems are disadvantageous, inter alia, due to offering possibilities insufficiently.

It is an object of the invention, inter alia, to provide a telecommunication system as described in the preamble which offers more possibilities.

Thereto, the invention relates to a telecommunications system according to claim 1.

By providing said telecommunication system with a multi-mode protection mechanism, with said first protective way for example corresponding with the DES algorithm and with said second protective way for example corresponding with the 3DES algorithm, whereby said sender has the possibility of selecting one of said modes, said sender has got the option of choosing and/or adjusting a level of protection.

The invention is based on the insight, inter alia, that different kinds of information and/or different packets of information and/or different pieces of information sometimes require different kinds of protection and/or different levels of protection.

The invention solves the problem, inter alia, of providing a telecommunication system for transporting and protecting information in a more flexible way.

By introducing said billing mechanism, which could be realized entirely by software, entirely by hardware, or by a combination of both, said sender is charged in dependence of the selected level of protection and/or of the selected kind of protection.

A second embodiment of the telecommunication system according to the invention is characterized in that said control information represents an economic value of said information to be transported.

By introducing said economic value, the user-friendliness of said telecommunication system is increased a lot, due to money making the world go round.

A third embodiment of the system according to the invention is that said telecommunication system comprises a returning mechanism for in response to a detection of transported information having become available to at least one third party returning a predefined value to said sender, which predefined value is a function of said economic value.

By introducing said returning mechanism, which could be realized entirely by software, entirely by hardware, or by a combination of both, and which is coupled to said sender directly, or indirectly via a fourth party (banking and/or insuring company), said telecommunication system not just offers the transport and protection of information but offers also the insurance of said information. Said detection will generally be done by said sender directly, or indirectly via a fifth party (p.i. company) in response to which said telecommunication system needs to be informed.

A terminal can be used in a telecommunication system for transporting information from a sender using said terminal to a receiver using a further terminal, which telecommunication system comprises a protection mechanism for protecting said information against becoming available to at least one third party.

The terminal comprises a protection mechanism that have at least a first mode for protecting said information according to a first protective way and has at least a second mode for protecting said information according to a second protective way, with said first and second protective way being mutually different, whereby said terminal is provided with an activation mechanism coupled to said protection mechanism for activating at least one of said modes in dependence of at least control information originating from said terminal.

Said control information represents an economic value of said information to be transported.

A terminal can be used in a telecommunication system for transporting information from a sender using said terminal to a receiver using a further terminal, which terminal comprises a protection mechanism for protecting said information against becoming available to at least one third party.

This terminal comprises a protection mechanism has at least a first mode for protecting said information according to a first protective way and has at least a second mode for protecting said information according to a second protective way, with said first and second protective way being mutually different, whereby said telecommunication system is provided with an activation mechanism to be coupled to said protection mechanism for activating at least one of said modes in dependence of at least control information originating from said sender. The control information might represent an economic value of said information to be transported.

The invention also relates to a method for transporting information from a sender using a sending terminal to a receiver using a receiving terminal according to claim 3.

A first embodiment of the method according to the invention is that said method comprises the step of
- in response to a detection of transported information having become available to at least one third party, returning a predefined value to said sender, which predefined value is a function of said economic value.

The invention also relates to software according to claim 5.

Both references US Patent 5,345,502, of September 6, 1994, and the European Patent Publication EP 876 067, of November 4, 1998, disclose (virtual) private network inventions in which said telecommunication system according to the invention and/or terminals according to the invention and/or method according to the invention can be implemented very advantageously.

The invention will be further explained at the hand of an embodiment described with respect to drawings, whereby
figure 1 discloses a general overview of a telecommunication system according to the invention, and

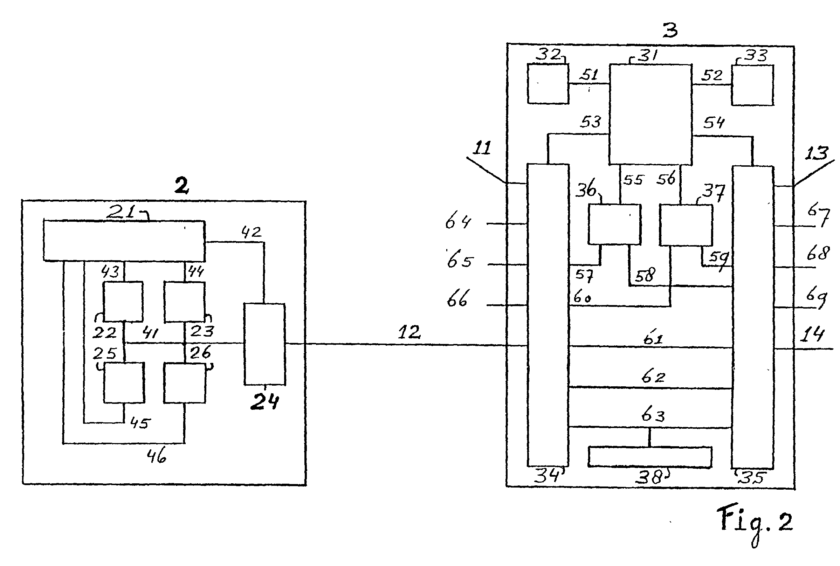

figure 2 discloses a more detailed part of a telecommunication system according to the invention comprising a terminal.

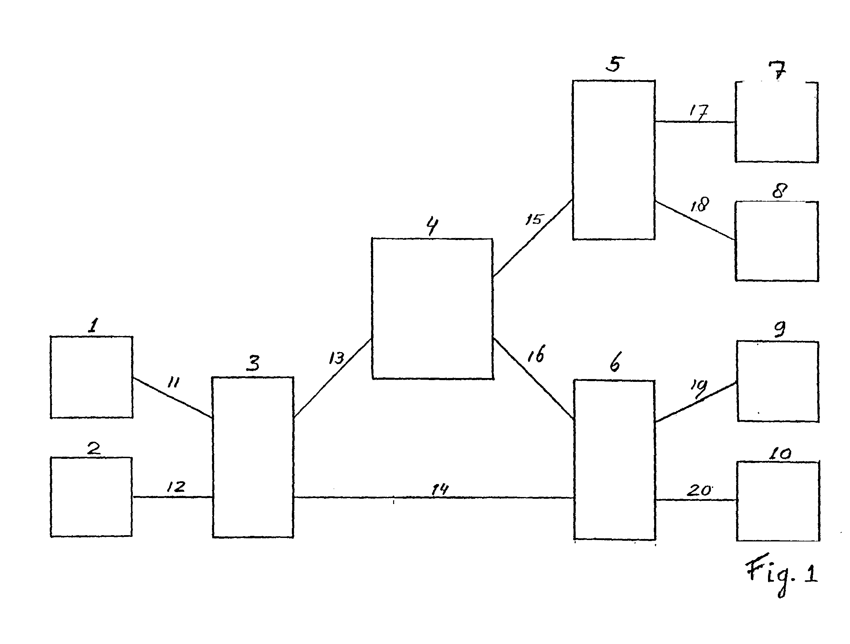

The general overview of a telecommunication system according to the invention shown in figure 1 discloses (for example fixed or wireless or mobile) terminals 1,2,7,8,9,10 and (for example private) switches 3,5,6 and (for example public) switch 4. Terminals 1,2 respectively are coupled to switch 3 via (for example wired or wireless) couplings 11,12 respectively, and terminals 7,8 respectively are coupled to switch 5 via (for example wired or wireless) couplings 17,18 respectively, and terminals 9,10 respectively are coupled to switch 6 via (for example wired or wireless) couplings 19,20 respectively. Switches 3,5,6 respectively are coupled to switch 4 via (wired or wireless) couplings 13,15,16 respectively, and switches 3 and 6 are coupled via (wired or wireless) coupling 14.

The more detailed part of a telecommunication system according to the invention discloses terminal 2 according to the invention coupled to switch 3 according to the invention via (wired or wireless) coupling 12. In general, a telecommunication system according to the invention will comprise at least a switch (according to the invention) or for example a router or a Voice-Over-IP gateway.

Terminal 2 comprises a processor 21 coupled via a connection 42 to transceiver 24, which is coupled to (wired or wireless) coupling 12 for transmitting/receiving information in a wired or wireless or mobile way, and which is further coupled to a bus 41, which bus 41 is coupled to a first protector 22, a second protector 23, an activator 25 and a man-machine-interface (mmi) 26 (keyboard/display/cd-rom/diskette-station/memory etc.) respectively which all are coupled to processor 21 via connections 43,44,45,46 respectively.

Switch 3 according to the invention comprises a processor 31 coupled to an activator 32 via a connection 51 and to a billing circuit 33 via a connection 52 and to a first connector 34 via a connection 53 and to a second connector 35 via a connection 54 and to a first protector 36 via a connection 55 and to a second protector 37 via a connection 56. First connector 34 is connected to coupling 12 and to coupling 11 and to couplings 64,65,66 (possibly via transceivers not shown) at one side and to first protector 36 via a connection 57 and to second protector 37 via a connection 60 and to second connector 35 via connections 61,62 and bus 63 at the other side. Second connector 35 is connected to coupling 13 and to coupling 14 and to couplings 67,68,69 (possibly via transceivers not shown) at one side and to first protector 36 via a connection 58 and to second protector 37 via a connection 59 and to first connector 34 via said connections 61,62 and said bus 63 at the other side. Bus 63 is coupled to memory 38.

The terminal and the telecommunication system according to the invention comprising at least the switch according to the invention function as follows.

According to a first embodiment, starting from the assumption that terminals 1,2 and switch 3 form a first private network (implying that couplings 11 and 12 do not need extra protection) and that terminals 7,8 and switch 5 form a second private network (implying that couplings 17 and 18 do not need extra protection), a user sitting behind terminal 2 wants to send at least one data packet to a further user sitting behind terminal 8. Thereto, said data packet (having a size of for example 10 bytes or 1000 bytes or 1000000 bytes) flows via mmi 26 (where for example it has been entered by said user by using the keyboard or a floppy disk etc.) and bus 41 and transceiver 24 to coupling 12, with processor 21 controlling mmi 26 via connection 46 and controlling transceiver 24 via connection 42. Via coupling 12, said data packet arrives at connector 34 in switch 3, and connector 34 informs processor 31 via connection 53 of this arrival, in response to which processor 31 controls connector 34 via connection 53 in such a way that said data packet is stored in memory 38 via bus 63 (thereto, processor 31 will order controller 34 to connect coupling 12 with bus 63 and supply address information for addressing said memory 38).

Via mmi 26, said user then enters control information (for example representing an economic value of said data packet like 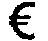 10 or 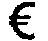 1000), which for example in the form of a control packet (having a size of for example 1 or 10 bytes) flows via bus 41 and transceiver 24 to coupling 12. Via coupling 12, said control packet arrives at connector 34 in switch 3, and connector 34 informs processor 31 via connection 53 of this arrival, in response to which processor 31 controls connector 34 via connection 53 in such a way that said control packet is stored in memory 38 via bus 63 (thereto, processor 31 will order controller 34 to connect coupling 12 with bus 63 and supply further address information for further addressing said memory 38).

Then (immediately or at a suitable moment) processor 31 controls connector 34 via connection 53 in such a way that said control packet is read out from memory 38 and is sent via bus 63 and connector 34 and connection 53 to processor 31 (thereto, processor 31 will supply said further address information for further addressing said memory 38 and order controller 34 to connect bus 63 with connection 53 and in response receive said control packet), after which processor 31 will supply said control packet via connection 51 to activator 32. Activator 32 analyses said control packet (for example by comparing said economic value with a threshold) and informs processor 31 via connection 51. In response of this, processor 31 either activates first protector 36 via connection 55 and controls connector 34 in such a way that said data packet is read out from memory 38 and via bus 63 and connector 34 and connection 57 is supplied to first protector 36, or processor 31 activates second protector 37 via connection 56 and controls connector 34 in such a way that said data packet is read out from memory 38 and via bus 63 and connector 34 and connection 60 is supplied to second protector 37. As a result, either in first protector 36 said data packet is protected according to a first protective way (for example DES) and via connection 58 and connector 35 (which is controlled via connection 54 by procesor 31 which via connection 55 is informed of said first protection being ready) supplied to coupling 13, or in second protector 37 said data packet is protected according to a second protective way (for example 3DES) and via connection 59 and connector 35 (which is controlled via connection 54 by processor 31 which via connection 56 is informed of said second protection being ready) supplied to coupling 13.

According to a first alternative to said first embodiment, said user enters said control information at terminal 2, in response to which switch 3 is made ready for protecting according to a first or second protective way immediately (or at a suitable moment), after which said data packet is sent to switch 3 and protected immediately (or at a suitable moment).

According to a second alternative to said first embodiment, said user enters said control information at terminal 2, after which said control packet and said data packet are combined and sent together to switch 3, in response to which switch 3 is made ready for protecting according to a first or second protective way immediately (or at a suitable moment), whereby said data packet is protected immediately (or at a suitable moment).

According to a third alternative to said first embodiment, said user does not need to enter said control information at terminal 2, for example due to switch 3 (processor 31) being programmed in such a way that data packets originating from terminal 2 are to be protected according to said first protective way or said second protective way in dependence of for example data packet characteristics. Then, in switch 3, activator 32 for example comprises a detector for detecting said data packet characteristics and in response defining for example an economic value and/or a corresponding protection, etc. Or, a user id and/or a terminal id are used as characteristics to be detected in switch 3 for defining for example an economic value and/or a corresponding protection, etc.

According to a fourth alternative to said first embodiment, instead of or in addition to activator 32 in switch 3, activator 25 in terminal 2 is used. As a consequence, at least a part of the activation of the kind of protection and/or the level of protection is shifted from switch 3 to terminal 2. In case of terminal 2 functioning in a window environment, for example activator 25 generates a window showing both options 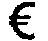 10 and 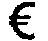 1000, one of them to be selected by a mouse click, in response to which activator 32, in dependence of said mouse click and for example certain data packet characteristics, defines a corresponding protection, etc.

According to a second embodiment possibly in addition to said first embodiment, said user further enters routing information at terminal 2 via mmi 26, which routing information is either sent separately to switch 3 or combined with either said control information or said data packet and then sent together to switch 3. This routing information is analyzed by processor 31 in switch 3 and results in for example the selection of coupling 13 in switch 3 and in for example the selection of coupling 15 in switch 4 and in for example the selection of coupling 18 in switch 5. Preferably, in switch 3 said routing information is coupled to said data packet. This could be done before said protection takes place, as a consequence of which in each switch a reverse protection must take place before routing can take place (routing information is also protected), and could be done after said protection has taken place, as a consequence of which in each switch a reverse protection is no longer necessary before routing can take place (routing information is now not protected). For example, protection according to a first protected way could imply said routing information not being protected, and protection according to a second protective way could imply said routing information also being protected.

According to an alternative to said second embodiment, said routing information itself at least partly replaces said control information for at least partly defining the level of protection and/or the kind of protection. For example the first protective way (for example DES) implies the use of coupling 13 for reaching switch 4, and the second protective way (for example 3DES) implies the use of coupling 14 and coupling 16 for reaching switch 4. Or, the protection is even completely defined by the routing: first protector 36 then has a function of coupling connection 57 to connection 58 which is to be coupled to coupling 13, and second protector 37 then has a function of coupling connection 60 to connection 59 which is to be coupled to coupling 14.

According to a third embodiment possibly in addition to said first and/or second embodiment, processor 31 controls billing circuit 33 via connection 52 in such a way that said user is charged in dependence of at least the level of protection and/or the kind of protection chosen, and/or of at least the quantity of data to be transmitted, etc.. A bill generated by billing circuit 33 could be sent back to said user at terminal 2 via coupling 12 each time said user has sent information, or on a regular basis, or could for example be sent via switch 4 to for example a banking company, again each time said user has sent information, or on a regular basis.

According to a fourth embodiment, possibly in addition to said first and/or second and/or third embodiment, switch 3 comprises a returning mechanism which for example forms part of billing circuit 33 and which, in response to a detection of said transported data packet having become available to at least one third party, returns a predefined value to said user, which predefined value is a function of said economic value. In case of said economic value being 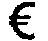 10 (or 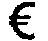 1000 respectively), said predefined value could be 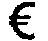 5, 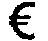 10 or 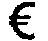 20, for example (or 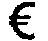 500, 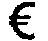 1000, 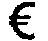 2000 respectively), which could be sent back to said user at terminal 2 via coupling 12 each time said detection has been made, or could for example be sent via switch 4 to for example a banking or insuring company, again each time said detection has been made. This detection could be done by human beings (for example working for a p.i. company) or by hacking machines located in the network for testing purposes. In both cases, in response to a detection, switch 3 in general and said returning mechanism in particular need to be informed. The advantageous combination of said returning mechanism and billing circuit 33 offers the possibility of charging said user in dependence of said economic value: in case said user has selected his data packet having an economic value of 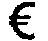 10, the transport of this data packet for example costs 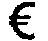 1, and in case of loss or becoming public, said user will get 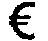 5 or 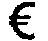 10 or 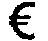 20; in case said user has selected his data packet having an economic value of 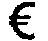 1000, the transport of this data packet for example costs 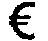 25, and in case of loss or becoming public, said user will get 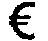 500 or 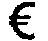 1000 or 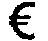 2000.

According to a fifth embodiment, starting from the assumption that terminals 1,2,7,8,9,10 and switches 3,4,5,6 form a public network (implying that any coupling 11,12,13,14,15,16,17,18,19,20 possibly needs extra protection), a user sitting behind terminal 2 wants to send at least one data packet to a further user sitting behind terminal 8. Thereto, via mmi 26, said user enters control information (for example representing an economic value of said data packet like 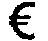 10 or 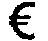 1000), which for example in the form of a control packet (having a size of for example 1 or 10 bytes) flows via bus 41 and transceiver 24 to coupling 12. Via coupling 12, said control packet arrives at connector 34 in switch 3, and connector 34 informs processor 31 via connection 53 of this arrival, in response to which processor 31 controls connector 34 via connection 53 in such a way that said control packet is stored in memory 38 via bus 63 (thereto, processor 31 will order controller 34 to connect coupling 12 with bus 63 and supply further address information for further addressing said memory 38).

Then (immediately or at a suitable moment) processor 31 controls connector 34 via connection 53 in such a way that said control packet is read out from memory 38 and is sent via bus 63 and connector 34 and connection 53 to processor 31 (thereto, processor 31 will supply said further address information for further addressing said memory 38 and order controller 34 to connect bus 63 with connection 53 and in response receive said control packet), after which processor 31 will supply said control packet via connection 51 to activator 32. Activator 32 analyses said control packet (for example by comparing said economic value with a threshold) and informs processor 31 via connection 51. In response of this, processor 31 generates activation information, which via connection 53, connector 34 and coupling 12 is sent to terminal 2. Via connection 42, processor 21 receives this activation information, and in response either activates first protector 22 via connection 43 or activates second protector 23 via connection 44.

Said data packet (having a size of for example 10 bytes or 1000 bytes or 1000000 bytes) flows via mmi 26 (where for example it has been entered by said user by using the keyboard or a floppy disk etc.) and bus 41 to either first protector 22 or to second protector 23, under control of processor 21. As a result, either in first protector 22 said data packet is protected according to a first protective way (for example DES) and via bus 41 and transceiver 24 and coupling 12 sent to switch 3, or in second protector 23 said data packet is protected according to a second protective way (for example 3DES) and via bus 41 and transceiver 24 and coupling 12 sent to switch 3. In switch 3, said protected data packet is then supplied to coupling 13, for example.

According to a first alternative to said fifth embodiment, said user does not need to enter said control information at terminal 2, for example due to processor 21 being programmed in such a way that data packets originating from terminal 2 are to be protected according to said first protective way or said second protective way in dependence of for example data packet characteristics. Then, in terminal 2, activator 25 for example comprises a detector for detecting said data packet characteristics and in response defining for example an economic value and/or a corresponding protection, etc. Or, a user id is used as a characteristic to be detected in activator 25 for defining for example an economic value and/or a corresponding protection, etc.

According to a second alternative to said fifth embodiment, instead of or in addition to activator 32 in switch 3, activator 25 in terminal 2 is used. As a consequence, at least a part of the activation of the kind of protection and/or the level of protection is shifted from switch 3 to terminal 2. This offers the possibility, for example, of introducing in terminal 2 a first kind of protection and/or a first level of protection (for example DES versus 3DES), and of introducing in switch 3 a second kind of protection and/or a second level of protection (for example a first route versus a second route).

According to a third alternative to said fifth embodiment, said control packet is not stored in memory 38, but is immediately supplied via connector 34 and connection 53 to processor 31, after which processor 31 will supply said control packet via connection 51 to activator 32. Activator 32 analyses said control packet (for example by comparing said economic value with a threshold) and informs processor 31 via connection 51. In response of this, processor 31 generates activation information, which via connection 53, connector 34 and coupling 12 is sent to terminal 2.

According to a sixth embodiment possibly in addition to for example said fifth embodiment, said user further enters routing information at terminal 2 via mmi 26, which routing information is combined with either said control information or said data packet (before or after protection has taken place, if said routing information is also protected, reverse protection will be necessary in each switch) and then sent together to switch 3. This routing information is analyzed by processor 31 in switch 3 and results in for example the selection of coupling 13 in switch 3 and in for example the selection of coupling 15 in switch 4 and in for example the selection of coupling 18 in switch 5. Preferably, in switch 3 said routing information is coupled to said data packet. This could be done before a possible protection in switch 3 takes place, as a consequence of which in each switch a reverse protection must take place before routing can take place (routing information is also protected), and could be done after a possible protection in switch 3 has taken place, as a consequence of which in each switch a reverse protection is no longer necessary before routing can take place (routing information is now not protected). For example, protection according to a first protected way could imply said routing information not being protected, and protection according to a second protective way could imply said routing information also being protected.

According to an alternative to said sixth embodiment, said routing information itself at least partly replaces said control information for at least partly defining the level of protection and/or the kind of protection. For example the first protective way (for example DES) implies the use of coupling 13 for reaching switch 4, and the second protective way (for example 3DES) implies the use of coupling 14 and coupling 16 for reaching switch 4. Or, the protection is even completely defined by the routing: first protector 36 then has a function of coupling connection 57 to connection 58 which is to be coupled to coupling 13, and second protector 37 then has a function of coupling connection 60 to connection 59 which is to be coupled to coupling 14.

According to a seventh embodiment possibly in addition to for example said fifth and/or sixth embodiment, processor 31 controls billing circuit 33 via connection 52 in such a way that said user is charged in dependence of at least the level of protection and/or the kind of protection chosen, and/or of at least the quantity of data to be transmitted, etc.. A bill generated by billing circuit 33 could be sent back to said user at terminal 2 via coupling 12 each time said user has sent information, or on a regular basis, or could for example be sent via switch 4 to for example a banking company, again each time said user has sent information, or on a regular basis.

According to an eighth embodiment, possibly in addition to for example said fifth and/or sixth and/or seventh embodiment, switch 3 comprises a returning mechanism which for example forms part of billing circuit 33 and which, in response to a detection of said transported data packet having become available to at least one third party, returns a predefined value to said user, which predefined value is a function of said economic value. In case of said economic value being 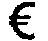 10 (or 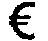 1000 respectively), said predefined value could be 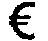 5, 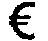 10 or 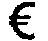 20, for example (or 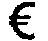 500, 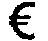 1000, 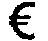 2000 respectively), which could be sent back to said user at terminal 2 via coupling 12 each time said detection has been made, or could for example be sent via switch 4 to for example a banking or insuring company, again each time said detection has been made. This detection could be done by human beings (for example working for a p.i. company) or by hacking machines located in the network for testing purposes. In both cases, in response to a detection, switch 3 in general and said returning mechanism in particular need to be informed. The advantageous combination of said returning mechanism and billing circuit 33 offers the possibility of charging said user in dependence of said economic value: in case said user has selected his data packet having an economic value of 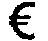 10, the transport of this data packet for example costs 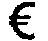 1, and in case of loss or becoming public, said user will get 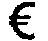 5 or 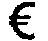 10 or 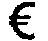 20; in case said user has selected his data packet having an economic value of 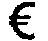 1000, the transport of this data packet for example costs 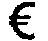 25, and in case of loss or becoming public, said user will get 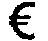 500 or 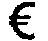 1000 or 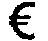 2000.

Instead of and/or in addition to said at least one data packet to be transmitted from terminal 2 to terminal 8, other information can be transported after being protected, like for example an email message, a text document, a fax, and packets forming part of a so called Voice-Over-IP call. As a consequence, the invention could be used in an online environment (more direct, more centralized, network processing capacity is available at terminal) as well as in an offline environment (more indirect, more decentralized, separation of terminal and network is possible) as well as in a mix of both (for example said control information is supplied offline and said routing information is supplied online, or vice versa). In combination with a so called Always-On-IP-Connection, said invention becomes even more advantageous. As a further consequence, more than one terminal could be used for said invention, for example terminal 2 for transport of said at least one data packet and/or packets of a Voice-Over-IP call, and terminal 1 for transport of a fax to the same destination (terminal 8). Said invention can be used in a private network, in a public network, in a combination of both, and in a virtual private network (which usually comprises such a combination).

Instead of and/or in addition to said DES and 3DES algorithms, other algorithms can be used (more keys and/or longer keys) and even other protective ways (like for example the use of different routes) belong to the possibilities. The transport of information from terminal 2 (via switch 3 and switch 5) to terminal 8 has been discussed, thereto terminal 8 (switch 5) will have to operate partly in a reverse way compared to terminal 2 (switch 3). Due to this, in general each terminal and each switch will be able to transmit as well as receive.

More than one user may use one and the same terminal (or one and the same network connection). In that case, generally, each user will have a user id, which may or may not be used in combination with said control information. Than, for example a first user having identified himself gets the option of selecting 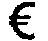 10, 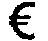 100 or 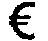 1000 (economic value) respectively, in response to which his keys comprise 64 bits, 128 bits or 256 bits respectively, he is charged per unit 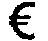 1, 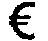 2 or 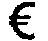 4 respectively, and in case of loss or a leak he will get 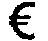 10, 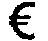 100 or 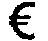 1000 (predefined value) respectively, a second user having identified himself gets the option of selecting 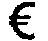 100 or 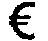 1000 respectively, in response to which his keys comprise 128 bits or 256 bits respectively, he is charged per unit 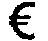 5 or 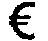 10 respectively (for example due to not using the system so often), and in case of loss or a leak he will get 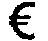 100 or 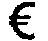 1000 respectively, a third user having identified himself gets the option of selecting 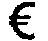 1000 or 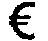 10000 respectively, in response to which his keys comprise 256 bits or 1024 bits respectively, he is charged per unit 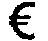 8 or 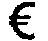 16 respectively, and in case of loss or a leak he will get 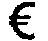 1000 or 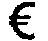 10000 respectively, etc. When discussing the billing/charging and returning, of course instead of one or more users a company may be involved, possibly with per company an internal overview per user. Therefore, this invention introduces full negotiations between users and transporters, again this could be done online or offline or mixed, whereby for example a contract between company and/or user at one side and the transporter at the other side at least partly could take the place of said control information, possibly in an individualized way.

Said billing/charging and returning as well as kind of protection and/or level of protection to be selected could be made dependent upon time (for example via a timing-signal-generator + detector) and/or sender (user id or company, for example via a sender-address-detector or id-detector) and/or destination (receiver, for example via a receiver-address-detector). For example, said first user who has identified himself gets the option of selecting 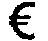 10, 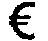 100 or 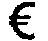 1000, respectively, in response to which his keys comprise 64 bits, 128 bits or 256 bits respectively, during quiet hours he is charged per unit 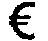 1, 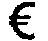 2 or 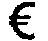 4 respectively and during busy hours he is charged per unit 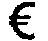 2, 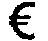 4 or 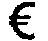 8 respectively, and in case of loss or a leak during business hours he will get 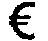 10, 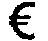 100 or 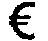 1000 respectively, in case of loss or a leak during quiet hours he will get 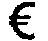 20, 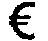 200 or 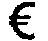 2000 respectively, and in case of loss or a leak with his destination belonging to the same company as said first user does, he will get 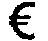 5, 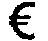 50 or 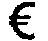 500 respectively. Art. 54(3) EPC document EP 1069787, with priority date 16.07.1999 discloses a personalized service generation enabling device, and Art. 54(3) EPC document EP 1069746, with priority date 16. 07. 1999 discloses a service provisioning network element.

The above described more dynamic behavior could be further increased by allowing a user and/or his company to adjust parameters, like said control information, for example said economic values and/or other billing/returning values, and like said protective ways to be chosen. Further, these kind of adjustments could be made automatically in response to measurements. For example, in case a user transmits a lot of units, said charging values could be decreased, and in case a user always selects the highest economic value of two economic values, than both could be increased and/or a third one could be added, etc.

Both terminal 2 and switch 3 are just exemplary embodiments. Many other embodiments are possible, like for example in terminal 2 using a connector instead of transceiver and bus, and/or using a transceiver and bus in switch 3 instead of one or more of said connectors, and/or using a larger memory in switch 3 for storing all information that has arrived, and/or using buffers in switch 3 and/or terminal 2 in addition to or for replacing a memory, and/or using a bus in switch 3 instead of two or more connections. Terminal 2 could be a wired terminal (like for example a screen-phone or a pc), or a wireless terminal (like for example DECT or a pc using infrared or radio for in-home communication), or a mobile terminal (like for example GSM, CTS, UMTS, WAP). Switch 3 could be a public switch or a private switch (PABX) or a mobile switch (like for example MSC) or a basestation (like for example a BS or BSC or DECT basestation).

Of all embodiments/alternatives each at least two embodiments/alternatives can be combined into a new one. The term mechanism is used to comprise hardware, software, a mix of hardware and software, and to include a possible human interaction (for example said billing mechanism and said returning mechanism could partly comprise a human interaction). Therefore, said method according to the invention not just defines the operation of a telecommunication system, but could further include a method of doing business.

## Claims

1. Telecommunication system for transporting information from a sender using a sending terminal (2) to a receiver using a receiving terminal (8) and comprising a protection mechanism (22, 23) for protecting said information against becoming available to at least one third party, said protection mechanism has at least a first mode for protecting said information according to a first protective way and has at least a second mode for protecting said information according to a second protective way, with said first and second protective way being mutually different, whereby said telecommunication system is provided with an activation mechanism (32) coupled to said protection mechanism for activating at least one of said modes in dependence of at least control information originating from said sender, **characterized in that** said telecommunication system comprises a billing mechanism (33) coupled to said activation mechanism for billing said sender in dependence of said control information, and said control information from said sender representing an economic value of said information to be transported.

2. Telecommunication system according to claim 1, **characterized in that** said telecommunication system comprises a returning mechanism (33) for in response to a detection of transported information having become available to at least one third party returning a predefined value to said sender, which predefined value is a function of said economic value.

3. Method for transporting information from a sender using a sending terminal (2) to a receiver using a receiving terminal (8) within a telecommunication system, the method comprising the step of protecting said information against becoming available to at least one third party,
- receiving control information from said sender, and
- in dependence of at least said control information, activating at least one of at least two modes comprising a first mode for protecting said information according to a first protective way and a second mode for protecting said information according to a second protective way, whereby said first and second protective way are mutually different , **characterized by** further comprising the step of billing said sender in dependence of said control information by said telecommunication system, wherein said control information represents an economic value of said information to be transported.

4. Method according to claim 3, **characterized in that** said method comprises the step of
- in response to a detection of transported information having become available to at least one third party, returning a predefined value to said sender, which predefined value is a function of said economic value of said information to be transported.

5. Computer software comprising code means adapted to perform all the steps of the method according to claim 3.

## Patentansprüche

1. Telekommunikationssystem zur Übertragung von Informationen von einem mit einem Sendeendgerät (2) arbeitenden Absender zu einem mit einem Empfangsendgerät (8) arbeitenden Empfänger, welches Telekommunikationssystem einen Sicherungsmechanismus (22, 23) zum Schutz der Informationen vor Zugriffen durch mindestens einen Dritten umfasst, wobei der Sicherungsmechanismus mindestens eine erste Betriebsart zum Sichern der Informationen auf eine erste Sicherungsart und mindestens eine zweite Betriebsart zum Sichern der Informationen auf eine zweite Sicherungsart aufweist, wobei die erste und die zweite Sicherungsart voneinander verschieden sind und wobei das Telekommunikationssystem mit einem an den Sicherungsmechanismus gekoppelten Aktivierungsmechanismus (32) zum Aktivieren mindestens einer der Betriebsarten zumindest in Abhängigkeit von vom Absender stammenden Steuerinformationen aufweist, **dadurch gekennzeichnet, dass** das Telekommunikationssystem einen mit dem Aktivierungsmechanismus gekoppelten Abrechnungsmechanismus (33) umfasst, der dem Absender Gebühren in Abhängigkeit von den Steuerinformationen in Rechnung stellt, wobei die vom Absender stammenden Steuerinformationen einen ökonomischen Wert der zu übertragenden Informationen repräsentieren.

2. Telekommunikationssystem nach Anspruch 1, **dadurch gekennzeichnet, dass** das Telekommunikationssystem einen Rücksendemechanismus (33) umfasst, der aufgrund einer Feststellung, dass übertragene Informationen mindestens einem Dritten zugänglich geworden sind, dem Absender einen vorgegebenen Wert übermittelt, der von dem ökonomischen Wert abhängig ist.

3. Verfahren zur Übertragung von Informationen von einem mit einem Sendeendgerät (2) arbeitenden Absender zu einem mit einem Empfangsendgerät (8) arbeitenden Empfänger in einem Telekommunikationssystem, welches Verfahren folgende Schritte umfasst:
- Sichern der Informationen gegen Zugriffe durch mindestens einen Dritten;
- Empfangen von Steuerinformationen vom Absender; und
- Aktivieren mindestens einer von mindestens zwei Betriebsarten zumindest in Abhängigkeit von den Steuerinformationen, wobei die mindestens zwei Betriebsarten eine erste Betriebsart zum Sichern der Informationen auf eine erste Sicherungsart und eine zweite Betriebsart zum Sichern der Informationen auf eine zweite Sicherungsart umfassen, wobei die erste und die zweite Sicherungsart voneinander verschieden sind, **gekennzeichnet durch** folgenden weiteren Schritt:
- Berechnen von Gebühren für den Absender **durch** das Telekommunikationssystem in Abhängigkeit von den Steuerinformationen, wobei die Steuerinformationen einen ökonomischen Wert der zu übertragenden Informationen repräsentieren.

4. Verfahren nach Anspruch 3, **dadurch gekennzeichnet, dass** das Verfahren folgenden Schritt umfasst:
- aufgrund einer Feststellung, dass übertragene Informationen mindestens einem Dritten zugänglich geworden sind, wird dem Absender ein vorgegebener Wert übermittelt, der vom ökonomischen Wert der zu übertragenden Informationen abhängig ist.

5. Rechnersoftware mit Codierungsmitteln, die geeignet sind, alle Schritte des Verfahrens nach Anspruch 3 durchzuführen.

## Revendications

1. Système de communication pour le transport d'informations d'un émetteur utilisant un terminal d'émission (2) à un récepteur utilisant un terminal de réception (8) et comprenant un mécanisme de protection (22, 23) pour protéger lesdites informations et éviter qu'elles ne deviennent ainsi disponibles à au moins une tierce partie, ledit mécanisme de protection a au moins un premier mode pour protéger lesdites informations selon une première manière de protection et a au moins un second mode pour protéger lesdites informations selon une seconde manière de protection, lesdites première et seconde manières de protection étant mutuellement différentes, moyennant quoi ledit système de communication est équipé d'un mécanisme d'activation (32) couplé audit mécanisme de protection pour activer au moins l'un desdits modes en fonction d'au moins des informations de contrôle provenant dudit émetteur, **caractérisé en ce que** ledit système de communication comprend un mécanisme de facturation (33) couplé audit mécanisme d'activation pour facturer ledit émetteur en fonction desdites informations de contrôle, et lesdites informations de contrôle provenant dudit émetteur représentant une valeur économique desdites informations à transporter.

2. Système de communication selon revendication 1, **caractérisé en ce que** ledit système de communication comprend un mécanisme de retour (33) pour en réponse à une détection du fait que les informations transportées sont devenues disponibles à au moins une tierce partie, renvoyer une valeur prédéfinie audit émetteur, laquelle valeur prédéfinie dépend de ladite valeur économique.

3. Procédé pour le transport d'informations d'un émetteur utilisant un terminal d'émission (2) à un récepteur utilisant un terminal de réception (8) dans un système de communication, le procédé comprenant les étapes consistant à protéger lesdites informations et éviter qu'elles ne deviennent ainsi disponibles à au moins une tierce partie,
à recevoir des informations de contrôle dudit émetteur, et
en fonction d'au moins lesdites informations de contrôle, activer au moins l'un d'au moins deux modes comprenant un premier mode pour protéger lesdites informations selon une première manière de protection et un second mode pour protéger lesdites informations selon une seconde manière de protection, moyennant quoi lesdites première et seconde manières de protection sont mutuellement différentes, **caractérisé en ce qu'**il comprend en outre l'étape consistant à facturer ledit émetteur en fonction desdites informations de contrôle par ledit système de communication, dans lequel lesdites informations de contrôle représentent une valeur économique desdites informations à contrôler.

4. Procédé selon revendication 3, **caractérisé en ce que** ledit procédé comprend l'étape consistant à,
en réponse à une détection du fait que les informations transportées sont devenues disponibles à au moins une tierce partie, renvoyer une valeur prédéfinie audit émetteur, laquelle valeur prédéfinie dépend de ladite valeur économique desdites informations à transporter.

5. Logiciel informatique comprenant des moyens codes adaptés pour réaliser toutes les étapes du procédé selon la revendication 3.
